# EUROPEAN PATENT APPLICATION

(11) **EP 4 106 036 A1**
(43) Date of publication of application: **21.12.2022**
(21) Application number: 21179327.8
(22) Date of filing: 14.06.2021
(51) Int. Cl.: H01M 4/04, H01M 4/36, H01M 4/38, H01M 4/62, H01M 10/052, H01M 4/02

(54) **ALKALI METAL ANODE**

(71) Applicant: INL - International Iberian Nanotechnology Laboratory, 4715-330 Braga (PT)
(72) Inventor: Tai, Zhixin, 4715-330 Braga (PT); Liu, Lifeng, 4715-330 Braga (PT)
(74) Representative: AWA Sweden AB

(57) **Abstract**

The present invention relates to a composite material (1) comprising a Na alloy (2) and a fluoropolymer (3). This comprises a Na alloy (2) comprising Na as a first constituent and one of K, Li, Se, Sb, Sn and Bi as a second constituent. The composite material (1) comprising Na originating from the Na alloy (2) cross-linked with F originating from the fluoropolymer (3) such that a solid electrolyte interphase (17) is formed within the composite material (1). In the Na alloy (2) the first constituent is present in at least 60 mol % and the second constituent is present in at most 40 mol %. The present invention further relates to an anode (6), a battery (9) and methods (10, 20, 30) for producing said composite material (1) and said anode (6).

## Description

### Field of the invention

The present invention relates to a composite material and a method for producing a composite material. Further, the present invention relates to an anode comprising said composite material as well as a battery comprising said anode and a method for producing an anode.

### Background Art

With the development of portable electronic devices and electric vehicles, there is an increasing demand for rechargeable batteries with high energy density. However, the specific energy density of state-of-the-art lithium-ion batteries (LIBs) employing layered oxide-based cathode and graphite anode materials has almost reached its theoretical limit. Therefore, alternative anode materials with high specific capacity that can replace graphite anode materials are expansively being explored.

In this regard, sodium-ion batteries (SIBs) have been proposed to be a promising alternative to LIBs, owing to the higher earth abundance and markedly lower price of sodium (Na), as well as the much broader availability of Na-containing raw materials, e.g. from natural deposits in minerals and seawater. In particular, SIBs are expected to play an important role in stationary grid storage of renewable energy. In recent years, SIB cathode materials have advanced substantially, but SIB anode materials with a high capacity and stability still remain a major obstacle for realizing competitive SIBs. Given its high theoretical capacity (1166 mAh g⁻¹) and low electrochemical potential (-2.71 V *vs.* the standard hydrogen electrode), metallic Na has been proposed to be the most promising anode material to achieve high performance in not only SIBs, but also in batteries based on Na-oxygen, Na-sulfur, and Na-halide chemistries.

However, major challenges must still be overcome for widely deploying Na metal anodes in commercial batteries. Besides dendrite growth, metallic Na is more reactive than Li, which causes spontaneous reduction of organic solvents. Continuous Na stripping and plating would consume electrolyte and trigger uncontrolled dendrite growth and the formation of dead Na, leading to a low Coulombic efficiency, poor cycling stability and detrimental gassing issues.

In the past decade, a number of strategies have been developed to mitigate the above problems. The developed strategies include electrolyte formulation optimization, introduction of an artificial solid-electrolyte interphase (SEI), use of three-dimensional (3D) porous current collector as a Na host and design of solid electrolyte. Notwithstanding some progress problems remain for widely deploying Na metal anodes in commercial batteries. In order to successfully deploying Na metal anodes in commercial batteries a number of characteristics will have to be fulfilled by the Na metal anodes. In this regard it is highly desirable to create a SEI layer which is robust enough to sustain high-rate operation. Moreover, it is highly desirable to create an anode architecture which enables sufficient gravimetric and volumetric energy densities. Another problem resides in that the fabrication process of Na metal anodes is not easily compatible with current battery manufacturing procedures which in turn brings about increased costs.

Thus, there is a need for improved materials in order to manufacture more robust and sustainable rechargeable batteries that are able to offer a high energy density for stationary and mobile energy storage.

### Summary of the invention

In view of the above, it is an object of the present invention is to provide an improved composite material, an improved anode, an improved battery and improved production methods which altogether alleviate the above-mentioned drawbacks.

Another object is to provide such a composite material, designed for an anode and a battery which mitigates and consequently reduces dendrite growth.

Another object is to provide such a composite material, designed for an anode and a battery which is more stable and hence less prone to undergo undesired reactions.

Another object is to provide such a composite material, designed for an anode and a battery which provides increased gravimetric and volumetric energy densities.

Another object is to provide such a composite material, designed for an anode and a battery which is easy to manufacture.

Another object is to provide such a composite material, designed for an anode and a battery which is less costly to manufacture.

To achieve at least one of the above objects and also other objects that will be evident from the following description, a composite paste having the features defined in claim 1 is provided according to the present inventive concept. An anode and a battery including the composite paste are provided according to claims 10 and 11 respectively. Methods of manufacture are provided according to claims 12 and 15 respectively. Preferred variations to the inventive concept will be evident from the dependent claims.

According to a first aspect there is provided a composite material comprising a Na alloy and a fluoropolymer, wherein the Na alloy comprises: Na as a first constituent; and one of K, Li, Se, Sb, Sn and Bi as a second constituent, wherein the composite material comprising Na originating from the Na alloy cross-linked with F originating from the fluoropolymer such that a solid electrolyte interphase is formed within the composite material, and wherein the first constituent is present in at least 60 mol % and the second constituent is present in at most 40 mol % in the Na alloy.

The terms "fluoropolymer" or "fluorine-containing polymer" is to be construed as a fluorocarbon-based polymer with multiple carbon-fluorine bonds. A fluoropolymer is hence a fluorine-containing polymer, which mainly includes a polymer based on many repeating monomeric units or monomers of fluoroalkyl substances. The fluoropolymer may be a homopolymer of one monomeric unit or a copolymer two or more monomers. For example, polytetrafluoroethylene (PTFE) is a typical fluoropolymer. The structure of Formula I shows the structure of PTFE wherein the monomeric unit is within the brackets and n denotes the number of repeating units and *n* may go towards infinity, preferably n is at least 100. The average molecular weight of the fluoropolymer may range from 1.4·10⁴ to 1.2·10⁶ g/mol.

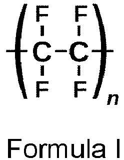

The present inventive concept is based on the fact that Na is prone to defluorinating fluoropolymers such as polytetrafluoroethylene (PTFE), leading to the formation of a mixture of cross-linked polyenes and NaF, which can serve as an effective artificial SEI layer with high Na⁺ conductivity and mechanical robustness. Thus, the Na alloys according to the present inventive concept may form a composite material with fluoropolymer wherein an artificial SEI is formed within the composite material.

Several significant advantages are achieved by the composite material of the present inventive concept. The composite material may form of an artificial SEI layer on an alkali metal, alloy surface, electrically conductive substrate or anode. The artificial SEI layer may suppress or prevent dendrite growth on an electrode during operation of an electrochemical cell. The artificial SEI layer may provide a stable electrode/electrolyte interface resulting in that undesired reactions are counteracted or prevented. Hence, the composite material may provide for anodes and batteries having significantly improved cycling characteristics.

Further, the Na alloy has a lower melting point compared to solid Na and is quasi-liquid, and may form a conformal coating layer on the surface of e.g. an electrically conductive substrate or a current collector of an electrode. The layer may thus suppress dendrite formation on the electrode during operation of the electrochemical cell. Dendrites are typically tree-like structures including thin needle-like projections commonly referred to as whiskers. Dendrites may grow inside an electrochemical cell where it may cause a number of undesired or problematic effects including reactions between the electrolyte and the anode, consumption of electrolyte, potential short circuit and premature cell failure.

However, it has been found that fluoropolymer and especially PTFE powders react with a Na foil rather slowly at room temperature. Thus, according to the present inventive concept, an alloy of Na and a second constituent selected from K, Li, Se, Sb, Sn and Bi, is introduced in order to boost or catalyse the cross-linking reaction between Na and F of the fluoropolymer. The amount of the second constituent in the alloy may be at most 40 mol %. The amount of the second constituent in the alloy may be at most 30 mol %. The amount of the second constituent in the alloy may be at most 20 mol %. The amount of the second constituent in the alloy may be at most 10 mol %. The amount of the second constituent in the alloy may be at most 5 mol %. Correspondingly, the amount of the first constituent in the alloy may be at least 60 mol %. The amount of the first constituent in the alloy may be at least 70 mol %. The amount of the first constituent in the alloy may be at least 80 mol %. The amount of the first constituent in the alloy may be at least 90 mol %. The amount of the first constituent in the alloy may be at least 95 mol%.

Accordingly, yet another advantage of the present inventive concept is that the reaction of forming the composite material proceeds at room temperature. Herein, when forming an alloy comprising Na and a second constituent element, K generally plays a more important role than e.g. Li since K is more active in the cross-linking reaction with F.

The Na alloy may further comprise a third constituent selected from the group consisting of: K, Li, Cu, Al, Se, Si, Sb, Sn and Bi wherein the third constituent is different from the second constituent. The amount of the third constituent in the alloy may be at most 40 mol %. By introducing a third constituent in the Na alloy, the properties of the resulting composite material may be tailored to suit specific needs. For instance, a third constituent may be introduced when the composite material is to be used for certain applications in order to achieve certain desired properties.

Moreover, the Na alloy may further comprise a fourth constituent selected from the group consisting of: K, Li, Cu, Al, Se, Si, Sb, Sn and Bi wherein the fourth constituent is different from the second constituent and the third constituent. The amount of the fourth constituent in the alloy may be at most 20 mol %. By introducing a fourth constituent in the Na alloy, the properties of the resulting composite material may be tailored further to suit specific needs. For instance, a fourth constituent may be introduced when the composite material is to be used for certain applications in order to achieve certain desired properties.

The Na alloy may be selected from the group consisting of: NaK, NaLi, NaSe, NaSb, NaSn and NaBi. As another alternative the Na alloy may be selected from the group consisting of: NaKLi, NaLiCu, NaLiAl, NaKSe, NaLiSi, NaKSb, NaKSn, NaLiSn and NaKBi. As a further alternative the Na alloy may be selected from the group consisting of: NaKLiSn, NaKLiSi, NaKLiCu and NaKBiSn. By the above Na alloys the properties of the resulting composite material may be tailored. For example, by introducing a third and/or a fourth constituent may result in the formation of unique microstructures and surface topology. The resulting alloy may end up having a well-defined, spatially ordered nanosphere array on its surface, which may help suppress the dendrite growth when used as an anode in a battery.

The Na alloy may be NaK, which is advantageous in that the presence of K may more rapidly trigger the defluorination of the fluoropolymer due to its higher reactivity. Further, once in good contact the defluorination and cross-linking of fluoropolymer will continue due to the presence of abundant Na in the Na alloy.

According to a variant there is provided a composite material comprising Na alloy and a fluoropolymer, wherein the Na alloy comprises; Na as a first constituent; and one of K, Li and Sn as a second constituent, wherein the composite material comprising Na originating from the Na alloy cross-linked with F originating from the fluoropolymer such that a solid electrolyte interphase is formed within the composite material, and wherein the first constituent is present in at least 60 mol % and the second constituent is present in at most 40 mol % in the Na alloy.

According to a variant there is provided a composite material comprising a Na alloy and a fluoropolymer, wherein the Na alloy comprises; Na as a first constituent; and K as a second constituent, wherein the composite material comprising Na originating from the Na alloy cross-linked with F originating from the fluoropolymer such that a solid electrolyte interphase is formed within the composite material, and wherein the first constituent is present in at least 80 mol % and the second constituent is present in at most 5 mol % in the Na alloy.

The composite material of the present invention may be in the form of a composite paste.

The composite paste may, e.g., in the case of a NaK alloy be combined with a fluoropolymer.

Herein, a "paste" generally means a plastic composition of the Na alloy and the fluoropolymer.

The composite material may have a weight ratio between the Na alloy and the fluoropolymer that ranges from 6:1 to 1:4, preferably 1:1, which is advantageous in that the weight ratio plays an important role in an Na anode's cycle lifetime, which is heavily dependent on the weight ratio of Na alloy and fluoropolymer. Herein it has been shown that when fluoropolymer is added to the Na alloy it may markedly enhance the cycle life compared to pristine Na alloy.

In the case of the Na alloy being NaK, the composite material may have a mole ratio between Na and K that ranges from 30:1 to 200:1, preferably 32:1, 35:1, 57:1, 100:1, 135:1 or 171:1, most preferably 57:1, which is advantageous in that the mixture becomes slurry-like and may more easily react with the fluoropolymer. This fact may be explained by that the alloy shows a high diffraction intensity ratio which indicates that more Na atoms in the Na alloy are exposed to react with the fluoropolymer.

Moreover, Li, Cu, Al, Se, Si, Sb, Sn or Bi, may be used in combination with Na to form the alloy, for example a Na:Li alloy in a molar ratio of 75:25, or a Na:K:Li alloy in a molar ratio of 65:30:5, or a Na:K:Se alloy in a molar ratio of 65:33:2, or a Na:K:Bi alloy in a molar ratio of 66:32:2.

The fluoropolymer may be selected from the group consisting of: polytetrafluoroethylene (PTFE), ethylene tetrafluoroethylene (ETFE), perfluoroalkoxy alkanes (PFA), chlorotrifluoroethylene (CTFE), ethylene chlorotrifluoroethylene (ECTFE), polychlorotrifluoroethylene (PCTFE or PTFCE), tetrafluoroethylene (TFE), perfluorooctanoate (PFOA), hexafluoropropylene (HFP), copolymers of hexafluoropropylene (HFP), fluorinated ethylene propylene (FEP), ethylene-tetrafluoroethylenehexafluoropropylene-fluoroterpolymer (EFEP), hexafluoropropylene-tetrafluoroethylene-ethylene copolymer (THE), and fluorinated vinyl ether (FVE)and poly(3,3,3-trifluoropropyl methylsiloxane (PTFPMS), which is advantageous in that these highly fluorinated polymers may be defluorinated and form a conformal NaF protective layer on an electrode, e.g. an anode.

The fluoropolymer may be polytetrafluoroethylene, which is advantageous in that polytetrafluoroethylene consists of carbon and fluorine only, which make PTFE hydrophobic and water repellant. Hence neither water nor water-containing substances wet PTFE. Further, the rigid PTFE may provide a more conformal and stable SEI layer due to its continuous defluorination by newly exposed Na leading to a more robust electrode structure which remains nearly unchanged after prolonged cycling. Moreover, dendrite formation even after prolonged cycling may be significantly reduced.

According to a second aspect there is provided an anode comprising: an electrically conductive substrate, and a composite material according to the first aspect, wherein the composite material is arranged at a surface of the substrate, such that a solid electrolyte interphase is formed within the composite material.

In relation to this disclosure, an "electrolyte" or "electrolyte layer" has the property to provide ions and ion mobility sufficient for the composition to function as an electrolyte in an electrochemical cell. The electrolyte can e.g. be selected amongst sodium hexafluorophosphate (NaPF₆) in ethylene carbonate/diethyl carbonate (NaPF₆/EC/DEC), sodium hypochlorite (NaClO₄) in ethylene carbonate/diethyl carbonate (NaClO₄/EC/DEC), or sodium bis(trifluoromethanesulfonate)imide (NaTFSI) in poly(ethylene oxide) (NaTFSI/PEO).

An advantage of the anode of the present inventive concept is that it provides a homogeneous solid electrolyte interphase layer on the anode surface, protecting Na metal or passivating it against reaction with the electrolyte during electrochemical cycling. Along with the advantage that the composite material may suppress dendrite growth on the anode, the composite material may also enable a stable electrolyte/electrode interface which is less prone to undesired reactions.

Further, the anode according to the present inventive concept may include or be made up of a thin film of the composite material or composite paste spread on the surface of a conductive substrate or current collector.

The anode may be formed by drop-casting or blade-casting the composite material or composite paste on an electrically conductive substrate or a current collector.

The anode may be formed by roller coating the composite material or composite paste on an electrically conductive substrate or a current collector.

According to a third aspect there is provided a battery comprising an anode according to the second aspect. In general, features of this aspect of the invention provide similar advantages as discussed above in relation to the previous aspect of the invention. Consequently, said advantages will not be repeated in order to avoid undue repetition.

Herein, a "battery" may be a primary or a secondary battery, i.e. a non-chargeable or rechargeable battery, preferably the battery is rechargeable. The battery according to the present inventive concept may comprise at least one electrochemical cell, wherein a single anode and cathode are separated by electrolyte that is used to produce a voltage and current. The battery according to the present inventive concept may comprise a plurality of electrochemical cells.

According to a fourth aspect there is provided a method for producing a composite material comprising the steps of: - forming a Na alloy by mixing Na as a first constituent and at least one of K, Li, Se, Sb, Sn and Bi as a further constituent; - mixing the Na alloy with a fluoropolymer, thereby forming the composite material comprising Na originating from the Na alloy which is cross-linked with F originating from the fluoropolymer such that a solid electrolyte interphase forms within the composite material, and wherein the first constituent is present in at least 60 mol % and the further constituent is present in at most 40 mol % in the Na alloy. In general, features of this aspect of the invention provide similar advantages as discussed above in relation to the previous aspect of the invention. Consequently, said advantages will not be repeated in order to avoid undue repetition.

However, an advantage, compared to a similar approach for a Li/PTFE-composite material of the prior art, is that the method for producing a composite material according to the present inventive concept is introducing an artificial SEI in a completely different way which is less energy-intensive and more easily scalable.

The fluoropolymer may be provided in the form of particles having a size less than 10 micrometers, preferably less than 2 micrometers, which is advantageous in that the particle size of the fluoropolymer plays an important role in facilitating wetting of the fluoropolymer on the Na alloy and thus triggering a faster reaction with the Na alloy nanoparticles.

The fluoropolymer may be provided in the form of particles having a size ranging from 1 nanometer to 10 micrometers, preferably 50 to 300 nm. If the particle size is above 10 micrometers the cross-linking reaction may proceed so slow that valuable time is wasted when producing the composite material. The particles may be provided in the form of nanorods or nanowires or nanotubes.

Thus, an advantage of the present inventive concept may be that a faster reaction of the fluoropolymer with the Na alloy is provided.

The step of mixing the Na alloy and the fluoropolymer may be performed at a temperature in the range of 20-100 °C, preferably 20-25 °C.

Consequently, an advantage with the method may be that the reaction may be performed at room temperature (RT). Herein, "room temperature" typically means a temperature in the range 20-25 °C.

According to a variant there is provided a method for producing a composite material comprising the steps of: - forming a Na alloy by mixing Na as a first constituent and at least one of K, Li and Sn as a further constituent; - mixing the Na alloy with a fluoropolymer, thereby forming the composite material comprising Na originating from the Na alloy which is cross-linked with F originating from the fluoropolymer such that a solid electrolyte interphase forms within the composite material, and wherein the first constituent is present in at least 60 mol % and the further constituent is present in at most 40 mol % in the Na alloy.

According to another variant there is provided a method for producing a composite material comprising the steps of: - forming a Na alloy by mixing Na as a first constituent and K as a further constituent; - mixing the Na alloy with a fluoropolymer, thereby forming the composite material comprising Na originating from the Na alloy which is cross-linked with F originating from the fluoropolymer such that a solid electrolyte interphase forms within the composite material, and wherein the first constituent is present in at least 80 mol % and the further constituent is present in at most 5 mol % in the Na alloy.

The mixing of the Na alloy with a fluoropolymer may be performed by grinding and the produced composite material may be in the form of a paste, thereby forming particles having a size ranging from 1 nanometer to 10 micrometers, preferably 100 - 500 nm.

The step of forming the Na alloy may comprise mixing Na as the first constituent and one of Li, Cu, Al, Se, Si, Sb, Sn and Bi as the second constituent by heating. In the step of forming the Na alloy by mixing Na as the first constituent and K as the second constituent, mechanical grinding may be enough in order to form NaK alloy, thus the alloy will form even without heating.

In the case of the alloy being NaK-based, e.g. NaK, NaKBi, NaKSn, NaKLi, or NaKSe, the method may further comprise a step of press-rolling the composite material formed as composite paste into a film having a thickness ranging from 50 nanometers to 500 micrometers. The step of press-rolling may be performed at room temperature.

The step of press-rolling may be used for other alloys. The step of press-rolling may be performed at a temperature of at most 100 °C, preferably at room temperature, 20-25 °C.

According to a fifth aspect there is provided a method for producing an anode comprising: coating an electrically conductive substrate with a composite material according to the first aspect at a surface of the substrate, thereby forming the anode with a solid electrolyte interphase at its surface. Hence, the SEI is arranged at a surface meaning typically that an artificial solid electrolyte interphase layer is formed spontaneously when the composite material is brought in contact with the anode. The artificial solid electrolyte interphase may be at the surface of the anode. Further, the SEI may be at a surface region of the anode, meaning that the SEI may be present in a region which is close to the surface of the anode. Hence, the SEI may be at the surface of the anode and/or it may extend slightly into the anode material. In other words, the SEI may also extend into the substrate depending on the material of the substrate.

Conventionally, a solid electrolyte interface is a passivation layer formed on the surface of anode materials produced by electrolyte decomposition. SEIs formed with traditional liquid electrolytes are heterogeneous and easy to crack during cycling, thus resulting in formation of dendritic and dead Na in case of an Na-based anode. Formation of dendritic and dead Na is critical to the electrode performance and will typically significantly reduce the electrode performance.

An anode produced according to the fifth aspect including an artificial SEI may on the other hand, be formed within the composite material and may consequently provide an increased mechanical stability of the anode. An anode produced according to the fifth aspect may thus also provide a high strength or adaptivity, and may also provide a flexible, stable, ion conductive and electrically insulating layer that may provide stable cycling of the anode.

In general, features of this aspect of the invention provide similar advantages as discussed above in relation to the previous aspects of the invention. Consequently, said advantages will not be repeated in order to avoid undue repetition.

Thus, the present invention describes a novel high-performance nanostructured sodium metal anode with a robust artificial SEI layer, which has several advantages: The nanostructured sodium can effectively reduce the local current density, rendering uniform plating/stripping to mitigate dendrite formation. Moreover, no extra host structure needs to be introduced in the anode, facilitating improvement of energy density. Moreover, the fluoropolymer-derived artificial SEI described above shows a high ionic conductivity and good mechanical robustness, preventing over-consumption of electrolyte and enabling the cell to operate at high charge/discharge rates. The electrode, e.g. anode fabrication method may be compatible with that employed in high-volume battery manufacturing and can consequently be scaled up. Moreover, the thickness of the anode can be tuned given the physical form of the composite material. In other words, the composite material according to the present inventive concept holds substantial promise for use in an anode for fast charging sodium metal batteries.

Further features of, and advantages with, the present invention will become apparent when studying the appended claims and the following description. The skilled person will realise that different features of the present invention may be combined to create variants other than those described in the following, however the present invention is defined by the appended claims. Features of one aspect may be relevant to anyone of the other aspects.

### Brief description of the drawings

The above and other aspects of the present inventive concept will now be described in more detail, with reference to appended drawings showing variants of the present inventive concept. The figures should not be considered limiting the inventive concept, instead they are used for explaining and understanding the inventive concept.

As illustrated in the figures, the sizes of layers and regions are exaggerated for illustrative purposes and are thus provided to illustrate the general structures of variants of the present inventive concept.
Figure 1 shows a schematic illustration of a synthesis of a composite material.
Figure 2 schematically illustrates a block scheme of a method for producing a composite material.
Figure 3 schematically illustrates a block scheme of a method for producing an anode.
Figure 4 schematically illustrates how composite paste may be applied by a roll-to-roll process for manufacturing of Na metal anodes.
Figure 5 shows a schematic illustration of a battery comprising an anode, a cathode and an electrolyte.
Figure 6 is a SEM image of the composite material.
Figure 7 is a SEM image of the anode surface after continuous electrochemical cycling.
Figure 8 is a SEM image of the composite material shown in low and high magnification.

### Detailed description

The present inventive concept will now be described more fully hereinafter with reference to the accompanying drawing, in which preferred variants of the inventive concept are shown. This inventive concept may, however, be embodied in many different forms and should not be construed as limited to the variants set forth herein; rather, these variants are provided for thoroughness and completeness, and fully convey the scope of the invention to the skilled person. Although individual features may be included in different variants, these may possibly be combined in other ways, and the inclusion in different variants does not imply that a combination of features is not feasible. In addition, singular references do not exclude a plurality. In the context of the present invention, the terms "a", "an" does not preclude a plurality.

The present invention discloses a novel composite material 1, a method 20 for producing the composite material 1 and methods 10, 30 that enable fabrication of nanostructured Na metal anodes 6 with a spontaneously formed, robust polymeric artificial SEI layer 17 from the composite material 1.

The composite material 1 described herein may be defined as a protection layer for electrodes, especially for Na anodes 6, wherein particularly the artificial SEI layer 17 which is formed within the composite material 1 may constitute the protection layer that prevents dendrite formation and subsequent degradation of the electrode.

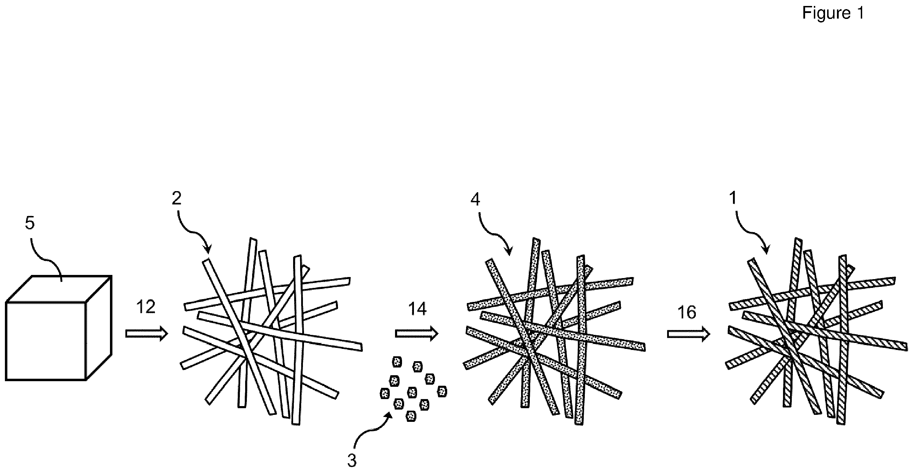

In figure 1 the composite material 1 is illustrated schematically. More specifically, a schematic illustration of the synthesis of the composite material 1 is shown together with its starting material, Na alloy ingots 5 and intermediate products, Na alloy 2 nanorods (NRs) and fluoropolymer coated Na alloy NRs 4. The composite material is typically formed from Na alloy ingots 5 which are mixed, preferably by grinding the Na alloy ingots 5 into Na alloy 2 nanorods (NRs), illustrated as step 12 in figure 1. The Na may as an alternative be provided in form of nanostructured micrometer-sized cubes, blocks, ingots, pieces or lumps.

The so formed Na alloy 2 NRs are then subjected to a further grinding, illustrated as step 14 in figure 1, in which the Na alloy 2 is grinded with fluoropolymer 3. The fluoropolymer 3 is, as depicted, preferably provided in the form of nanoparticles. The further grinding of step 14 may thus yield fluoropolymer coated Na alloy NRs 4. The subsequent reaction between Na and F pertaining to the fluoropolymer 3, illustrated as step 16 in figure 1, leads to cross-linking of the polymer, thereby an artificial solid electrolyte interphase layer 17 is formed within the composite material 1.

The composite material 1 may be in a form of a cross-linked mixture of Na alloy 2 and fluoropolymer 3, wherein the Na alloy 2 is a mixture of Na and one of K, Li, Se, Sb, Sn and Bi as a second constituent. It has been found that useful composite materials 1 having desired properties may be formed when the first constituent is present in at least 60 mol % and the second constituent is present in at most 40 mol % in the Na alloy 2.

At an optimal molar ratio, the second constituent of the Na alloy 2 catalyses the defluorination of fluoropolymer 3 in step 14, thus enabling continuous cross-linking of Na with F in step 16 and the formation of a robust composite material 1.

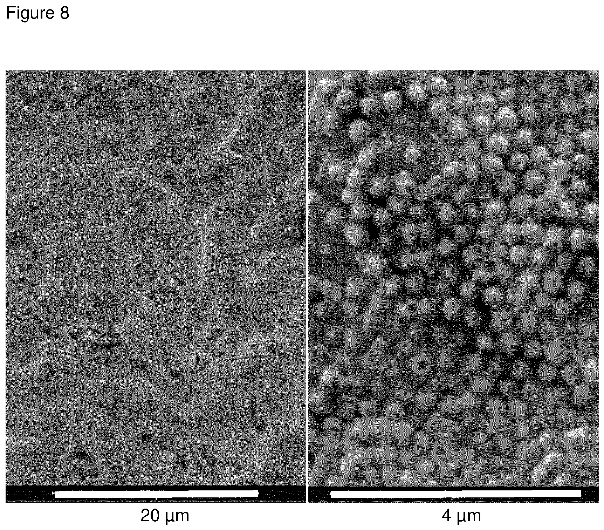

It has also been found that a third and a fourth constituent selected from the group consisting of: K, Li, Cu, Al, Se, Si, Sb, Sn and Bi, which are different from the second constituent and from each other, may be added to the Na alloy to tune its properties further. The introduction of a third or fourth constituent may result in the formation of unique microstructures and surface topology. For example, introducing 2 mol% Bi into NaK alloy will give rise to a ternary alloy, i.e. Na:K:Bi = 66:32:2 mol%, having a well-defined, spatially ordered nanosphere array on its surface (see figure 8), which may help suppress the dendrite growth when used as an anode in a battery.

Specific examples of alloys of the inventive concept may be NaK, NaLi, NaSe, NaSb, NaSn NaBi, NaKLi, NaLiCu, NaLiAl, NaKSe, NaLiSi, NaKSb, NaKSn, NaLiSn, NaKBi, NaKLiSn, NaKLiSi, NaKLiCu and NaKBiSn.

NaK has attracted a particular interest since it has surprisingly been shown that an NaK alloy in mole ratios ranging from 30:1 to 200:1, promotes wetting of the fluoropolymer 3 and thus leads to a faster cross-linked polymer layer on the surface of the Na alloy nanorods. NaK is the most extensively studied Na alloy used for forming a composite material 1 of the present inventive concept. Consequently, NaK will be discussed most extensively below although other Na alloys may be used to advantage in the composite material 1 of the present inventive concept.

The NaK alloy may be readily obtained due to the relatively weak interaction among Na atoms after that an amount of K diffuses into the Na lattice, also illustrated schematically in figure 1, step 12, wherein nanostructured micrometer-sized cubes of Na alloy ingots 5 are transformed into Na alloy 2 as nanorods. Preferred mole ratios of Na:K in the Na alloy 2 may be 32:1, 35:1, 57:1, 100:1, 135:1 or 171:1 in case the Na alloy 2 is NaK. It should be noted that the K content in the initial Na:K alloy may advantageously be kept below 2.6% (molar percentage). This is because for this particular Na alloy, NaK, the reaction between the NaK alloy and PTFE may proceed in an uncontrolled manner and may in a worst-case scenario lead to ignition and the formation of black carbonaceous products. Herein, the molar ratios of the different constituents are presented by the elements followed by a figure denoting the proportion relative to each other. For example, an alloy comprising Na and K may be denoted as NaₓK, wherein x may be an integer of at least 1.

It is further estimated that the initial nanorod structure of the depicted Na alloy 2 and the artificial SEI layer 17 introduced in composite material 1 play an essential role in the outstanding long-term stability upon Na plating and stripping at different current densities. This is because the nanorods may effectively reduce the local current density and regulate the Na plating even at high geometric current densities without triggering dendrite formation. Further, the artificial SEI 17 prevents direct contact of the electrolyte with Na suppressing thickening of SEI 17 upon cycling and formation of "dead" Na.

It has also been found that the cycle lifetime is strongly dependent on a weight ratio of the Na alloy 2 in relation to the fluoropolymer 3. Hence the weight ratio between the Na alloy 2 and the fluoropolymer 3 may preferably range from 6:1 to 1:4, preferably 1:1.

The fluoropolymer 3 may advantageously be selected from a number of highly fluorinated polymers. The fluoropolymer 3 may advantageously be selected from the group consisting of: polytetrafluoroethylene (PTFE), ethylene tetrafluoroethylene (ETFE), perfluoroalkoxy alkanes (PFA), chlorotrifluoroethylene (CTFE), ethylene chlorotrifluoroethylene (ECTFE), polychlorotrifluoroethylene (PCTFE or PTFCE), tetrafluoroethylene (TFE), perfluorooctanoate (PFOA), hexafluoropropylene (HFP), copolymers of hexafluoropropylene (HFP), fluorinated ethylene propylene (FEP), ethylenetetrafluoroethylene-hexafluoropropylene-fluoroterpolymer (EFEP), hexafluoropropylene-tetrafluoroethylene-ethylene copolymer (THE), and fluorinated vinyl ether (FVE)and poly(3,3,3-trifluoropropyl methylsiloxane (PTFPMS). All these polymers are highly fluorinated polymers which have been found to be useful when producing the composite material 1 of the present inventive concept.

PTFE is the most extensively studied fluoropolymer used for forming a composite material 1 of the present inventive concept. Consequently, PTFE will be discussed most extensively below although other fluoropolymers may be used to advantage in the composite material 1 of the present inventive concept.

As an example, PTFE nanoparticles (NPs), has been found to be easily mixed while forming a composite material 1. In this case the resulting the composite material 1 typically becomes in the form of a dark grey paste of PTFE at Na alloy nanorods. The composition of the so formed composite material 1 has been confirmed by Fourier transform infrared (FTIR) spectroscopy.

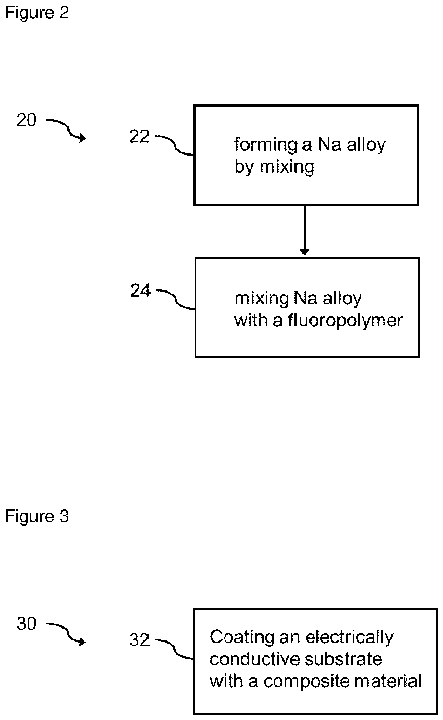

As presented above a composite material 1 may be formed by mixing and grinding of Na alloy 2 and fluoropolymer 3. Thus, herein there is also described a novel surprisingly easy and efficient method 20 for producing the novel composite material 1 at ambient temperatures which has been described in relation to figure 1 above. Further, the method 20 for producing a composite material is schematically illustrated in figure 2 in form of a block diagram. More specifically, the method 20 of figure 2 entails the steps of forming 22 a Na alloy 2 by mixing Na as a first constituent and at least one of K, Li, Se, Sb, Sn and Bi as a second or further constituent. The step of forming 22 is followed by a mixing step 24 of the Na alloy 2 with a fluoropolymer 3. Thereby the composite material 1 is formed. Hence, the composite material 1 comprises Na originating from the Na alloy 2 that is cross-linked with F originating from the fluoropolymer 3, such that a solid electrolyte interphase 17 forms within the composite material 1.

As described above the first constituent may be present in at least 60 mol % and the second or further constituent may be present in at most 40 mol % in the Na alloy 2. It has also been shown that an optimal molar ratio of the constituents of the Na alloy catalyses the reaction to proceed faster and continuously.

As illustrated in figure 1 fluoropolymer 3 may be provided in the form of particles having a size less than 10 micrometers, preferably less than 2 micrometers. This is advantageous for the production method 20, since smaller particle sizes facilitates the wetting of fluoropolymer and thus favour cross-linking of the polymer. For example, grinding of Na₅₇K alloy with PTFE microparticles of about 35 µm in diameter, was attempted but in this case the polymer, i.e. the PTFE, could not wet the Na₅₇K alloy to a sufficient degree. Moreover separation of white PTFE powders with Na₅₇K could clearly be seen even after extended grinding for 30 minutes. Likewise, the presence of K is crucial as K (or another suitable second constituent, i.e. Li) triggers rapid defluorination of the fluoropolymer given its higher reactivity with e.g. PTFE, promoting the wetting of PTFE on Na₅₇K NRs 4. Once in good contact, the defluorination and cross-linking of PTFE may continue due to the presence of abundant Na in Na₅₇K NRs, eventually resulting in a cross-linked polymeric layer on the nanorod surface embedded with NaF. Thus, as an example, the nanostructure of the Na₅₇K alloy and the relatively small nanoparticle size of PTFE of ca. 210 nm in diameter, play an important role in facilitating the wetting of fluoropolymer 3 on Na alloy 2. Another example is shown in figure 8, wherein Na₆₆K₃₂Bi₂ forms a highly well-defined, spatially ordered nanosphere array on its surface, which helps to increase the cycle lifetime and also effectively helps to suppress the dendrite growth when used as an anode in a battery. The electrochemical performance of the NaKBi alloy is showing an advantage of over e.g. pure metallic K, wherein it has proven to be very stable over a cycle time of 600 h, which includes several hundred cycles and not showing any significant dendrite formation.

Further, the step of mixing 24 the Na alloy 2 and the fluoropolymer 3 may be performed at a temperature in the range of 20-100 °C. Step 24 may also advantageously be performed at more ambient temperatures of 20-25 °C.

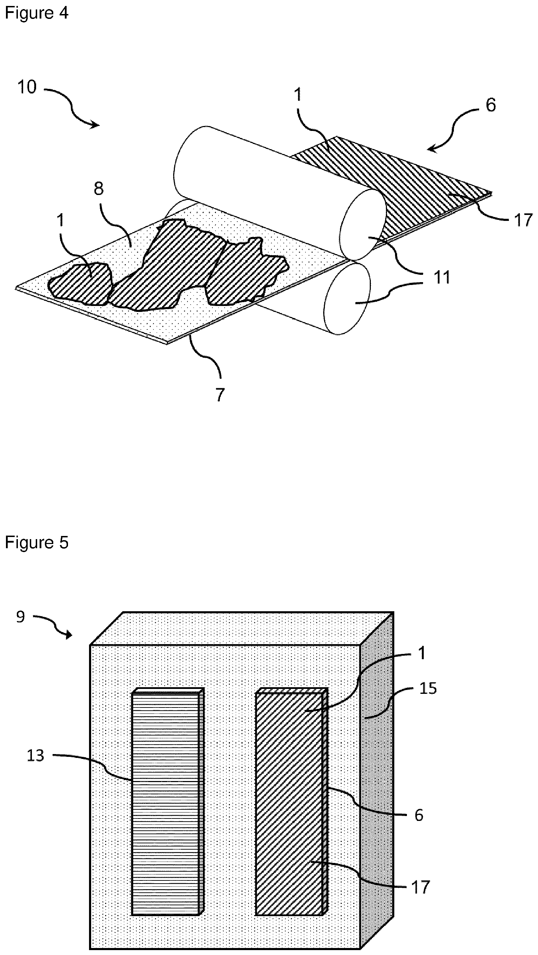

Moreover, figure 4 illustrates an anode 6 comprising an electrically conductive substrate 7 and a composite material 1. The composite material 1 is arranged at a surface 8 of the substrate 7, such that a solid electrolyte interphase 17 is formed within the composite material 1. Figure 3 further schematically illustrates a method 30 of manufacturing an anode 6 by coating 32 an electrically conductive substrate 7 with a composite material 1.

The composite material 1 may be coated or cast on the electrically conductive substrate 7 or a metallic current collector. The composite material 1 may also be coated 32 or applied by a so-called roll-to-roll process 10 as schematically illustrated in figure 4. In figure 4 it is illustrated how the composite material 1 is applied on the surface 8 of the conductive substrate 7 and then passed between rolls 11. This process 10 is highly suitable for upscale manufacturing of Na metal anodes 6 that may be coated with the composite material 1 with a solid electrolyte interphase 17 formed within.

In figure 5 it is shown how the anode 6, coated with the composite material 1 with a solid electrolyte interphase 17 formed within, may be part of a battery 9, which further comprises a cathode 13 and an electrolyte 15.

It will be appreciated that the present inventive concept is not limited to the variants shown. Several modifications and variations are thus conceivable within the scope of the invention which thus is defined by the appended claims.

### Experimental details

### Chemicals and materials

Polytetrafluoroethylene dispersion (60 wt% PTFE dispersion in H₂O), hexadecyltrimethylammonum (CTAB, ≥96%), sodium fluoride (NaF, >99.5%), vanadium oxide (V₂O₃, >99.7%), ammonium dihydrogen phosphate (NH₄H₂PO₄, >98%), sodium ingots, potassium ingots, and all other chemicals and solvents used for preparing the electrolyte including NaPF₆, ethylene carbonate (EC, anhydrous ≥ 99.0%), and diethyl carbonate (DEC, anhydrous ≥ 99.0%), were purchased from Sigma-Aldrich.

### Preparation of dry PTFE nanoparticles (NPs)

The following is one example of preparing fluoropolymer particles, wherein PTFE NPs were obtained by freeze-drying the commercial PTFE dispersion. Typically, 20 ml of PTFE preparation was poured into a glass bottle, which was then placed in liquid nitrogen for 2 hours. Afterwards, the frozen sample was loaded into a freeze-dryer to sublime water. During the freeze-drying process, the cold-trap temperature had been kept below -50 °C and the base pressure was no more than 15 Pa. The dry PTFE nanoparticles (NPs) were obtained after about 3 days.

### Fabrication of composite material anodes

The following is one example of preparing an anode, wherein bulk NaK alloy (NaₓK) was prepared by mixing metallic K and Na ingots with different mole ratios (x=1, 32, 35, 57, and 171), followed by repeated grinding using a pestle in a mortar, until uniform particles with silvery metallic luster were obtained. After that, a given amount of freeze-drying PTFE NPs were added into the mortar (NaK:PTFE = 1:1, w/w) and mixed with the NaK alloy particles by further grinding, until a high-viscosity slurry was formed. To investigate the effect of Na₅₇K:PTFE ratio on the electrochemical performance, composite anodes with other NaK:PTFE ratios of 0, 30, 75, 100, 150, 200, 250 and 300 wt.% were also prepared. The obtained composite slurry was cast on a stainless-steel collector with a circular disk of 10 mm in diameter and press-rolled into a sheet with a thickness of ca. 1 mm. All these operations were carried out in an Ar-filled glove box.

### Synthesis of Na₃V₂(PO₄)₃ (NVP) cathode materials

The following is one example of preparing a cathode 13, which may be used with an anode 6 in a battery 9 according to the present inventive concept, wherein Na₃V₂(PO₄)₃ cathode material was synthesized following the modified procedures according to a previous report. In brief, 3.645 g CTAB were dissolved in a 120 ml mixture of absolute ethanol and deionized water (12:1, v/v). After agitated under N₂ atmosphere for 2 h, 0.63 g NaF and 0.75 g V₂O₃ were added into the mixed solution. After another 30 min agitation, 1.725 g NH₄H₂PO₄ was poured into the previous mixture and the solution was constantly stirred for 24 h under N₂ atmosphere. Subsequently, the resulting black precipitates were collected and dried in a N₂ flow at room temperature. After ground in a mortar, the dried solid product was placed into a tube furnace that was pre-heated at 120 °C, and then calcinated at 750 °C under argon atmosphere for 6 h. The ramping rate was set to 5 °C min⁻¹. The Na₃V₂(PO₄)₃ cathode materials were obtained after cooling the furnace down to room temperature.

### Materials characterization

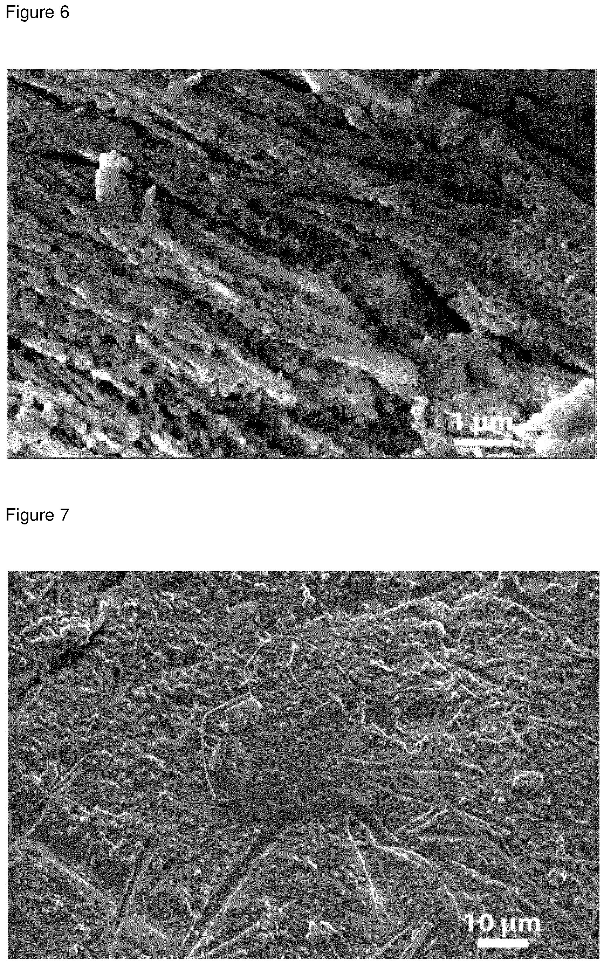

The morphology of the composite material 1, PTFE on Na alloy NRs, and metallic Na electrodes as well as the as-prepared Na₃V₂(PO₄)₃ powders was examined by scanning electron microscopy (SEM, FEI QuantaTM 650 FEG), figure 6 displays the morphology of the resulting composite material. Their crystal structure was characterized by X-ray diffraction (XRD) on an X'Pert PRO diffractometer (PANalytical) set at 45 kV and 40 mA, using Cu K_{α} radiation (λ = 1.541874 Å) and a PIXcel detector. It was noted that compared to other NaₓK alloys prepared, e.g. (x = 171, 38 and 32), Na₅₇K showed the highest diffraction intensity ratio of the (110) peak over the (200) peak (i.e. I(110)/I(200)), indicating that there would be more Na atoms in Na₅₇K exposed to react with PTFE NPs.

The microstructure and composition of the Na₃V₂(PO₄)₃ materials were inspected by transmission electron microscopy on a probe-corrected transmission electron microscope operating at 200 kV (FEI Titan ChemiSTEM 80-200). The Fourier transform infrared spectrum of PTFE NPs was acquired by a VERTEX 80v vacuum FTIR spectrometer. The surface chemistry of the electrodes was characterized using an ESCALAB 250 X-ray photoelectron spectrometer with Al source (1486.6 eV). The take-off angle between the electrode surface and the analyzer was 45° and the X-ray beam collected the signals of C1s, Na1s, F1s and O1s core-levels with a rastering area of 200 × 700 µm². For XPS depth profiling, an argon ion source was used to bombard the sample surface at 1 keV for a period of 30 s - 5 min at each depth. X-ray photoelectron spectroscopy (XPS) was further carried out to investigate the surface chemistry of the composite material 1. The XPS survey spectrum revealed the presence of Na, F, O and C elements. Further, high resolution C1s spectrum could be de-convoluted into four components. Besides the peak located at 284.3 eV, binding energy (BE) peaks at 291.2, 288.3 and 286.6 eV corresponding to -CF₂-, =CF-C≡ and -C-CFₙ-, respectively, were also observed, which is consistent with those previously reported for the PTFE defluorinated by Na. The high resolution Na1s spectrum could also be de-convoluted into two components that were assigned to Na-F (1071.3 eV) and Na-O (1073.3 eV), respectively, confirming the formation of NaF upon the defluorination of PTFE. The strong signal of Na-O should result from the surface oxide/hydroxide when exposing the electrode to air before the XPS inspection. The formation of NaF was also verified by the F-metal BE peak in the high resolution F1s spectrum, though it was overwhelmed by the strong C-F peak due to the fact that the PTFE covered the outer surface of Na NRs and the defluorinated PTFE dominated in the artificial SEI layer 17.

### Cell assembly and electrochemical testing

2032 coin cells were assembled in a glove box filled with 99.999% argon gas. The obtained composite material 1 slurry was cast on a circular stainless-steel collector with a 10mm diameter, and press-rolled into a sheet with a thickness of ca. 1 mm for use as the anode. For comparison, the pure Na metal anode 6 was fabricated by press-rolling Na ingots 5 into a thin sheet (ca. 1 mm in thickness), followed by mechanical cutting into circular disks of 10 mm in diameter. The cathode 13 was prepared by mixing the NVP active materials with Super P^{®} and polyvinylidene fluoride (PVDF) binder (7:2:1, w/w/w), followed by blade-casting on an aluminium current collector. The loading of the NVP active materials is around 2.55 mg cm⁻². The electrolyte 15 was composed of 1.0 M solution of NaPF₆ in ethylene carbonate (EC)/diethyl carbonate (DEC) (1:1, v/v), and Whatman glass filter (Grade GF/F) was used as the separator.

The galvanostatic charge/discharge tests were performed using a WonATech battery test station for both composite material 1//composite material 1 symmetric cells, i.e. an electrochemical cell wherein both electrodes are being anode 6, and composite material 1//NVP full cells, which may be a battery 9. The galvanostatic cycling experiments were performed in order to evaluate the reversibility of Na plating and stripping at different current densities in a symmetric cell. The electrode coated with composite material 1 demonstrated outstanding cycle stability. In contrast, the symmetric Na//Na cell without an artificial SEI on the electrode surface, showed an accumulatively thickened SEI caused by non-uniform Na plating and uncontrolled dendrite growth. Furthermore, the symmetric cell also displayed highly stable reversibility upon plating and stripping at higher current densities of 2 mA cm⁻² (capacity: 2 mAh cm⁻²) and 4 mA cm⁻² (capacity: 4 mAh cm⁻²) up to at least 600 hours, suggesting that the composite material 1 can enable high-rate operation in rechargeable Na batteries. Cyclic voltammetry (CV) and electrochemical impedance spectroscopy (EIS) tests of all coin cells were conducted on a Biologic VMP3 electrochemical workstation, to further elucidate the effect of artificial SEI 17 on the electrochemical performance. The EIS was carried out in a frequency range of 100 kHz to 10 mHz under open circuit conditions. For both composite material 1//NVP and Na//NVP full cells, a charge/discharge current density of 118 mA g⁻¹ corresponds to 1 C. It was noted that the electrode structure was robust and remained nearly unchanged and smooth anode surface even after 1000 h cycling, without any sign of dendrite formation. Figure 7 illustrates the morphology of the composite material anode 6 after continuous Na plating/stripping for 1000 h at a current density of 0.5 mA cm⁻² with a capacity of 0.5 mAh cm⁻². The cross-linking nature was also observed clearly, which is believed to help maintain the integrity of the electrode and enhance its toughness during the volume change induced by Na plating and stripping. In stark contrast, the flat bare Na electrode subjected to the same plating/stripping cycles showed progressive evolution of Na dendrites which would continuously consume the electrolyte over time, eventually leading to a sharp increase in the polarization voltage after 100 h.

Moreover, the resistance arising from the PTFE/Na interfaces and transportation of Na ions through the artificial SEI layer 17 was nearly constant, which manifests that the formed artificial SEI 17 effectively stabilizes Na and mitigates the side reactions and that the NaF in the artificial SEI 17 provides a high ion conductivity, low diffusion barrier and high surface energy to allow fast ion transport. In contrast, the SEI in the bare Na//Na cell was increasing over time, which suggested that the Na/SEI interface is unstable and fragile, leading to uncontrolled dendrite growth and associated electrolyte consumption and sluggish Na ion transport.

The cycle stability of the composite material 1//NVP cell was further compared to that of the Na//NVP full cell where a flat Na foil was used as the anode. While at a low charge rate (e.g. 0.2 C) the composite material 1//NVP exhibited similar cycle stability to that of Na//NVP, it was found that at higher charge rates composite material 1//NVP cell showed high capacity retention of 80.7%, 76.5% and 71.5% at 1 C, 2 C and 3 C, respectively, after 450 cycles, revealing a cycle stability much better than that of the Na//NVP cell (with capacity retention of 56.1%, 54.1% and 34.3% at 1C, 2 C and 3C after 450 cycles). Further, the performance of the composite material 1//NVP cell in lean electrolyte (10 µL) was also tested. The cell could retain 73.2% of its capacity at 1 C after 350 cycles. Furthermore, the full cell tests manifested that the composite material 1 holds substantial promise for use in an anode 6 as a high-performing anode 6 for fast-charging Na metal batteries 9.

The electrochemical performance of other NaₓK alloy : PTFE anodes with different Na:K molar ratios (x = 171 and 32) were also evaluated in full cells. While the PTFE on Na₃₂K alloy showed moderate capacity retention upon cycling at 1 C, the PTFE on Na₁₇₁K alloy only exhibited a slight improvement in capacity retention compared to the bare Na anode. This highlights the importance of a composite material comprising at least a NaₓK alloy.

## Claims

1. A composite material (1) comprising a Na alloy (2) and a fluoropolymer (3), wherein the Na alloy (2) comprises:
Na as a first constituent; and
one of K, Li, Se, Sb, Sn and Bi as a second constituent,
wherein the composite material (1) comprising Na originating from the Na alloy (2) cross-linked with F originating from the fluoropolymer (3) such that a solid electrolyte interphase (17) is formed within the composite material (1), and wherein the first constituent is present in at least 60 mol % and the second constituent is present in at most 40 mol % in the Na alloy (2).

2. The composite material (1) according to claim 1, wherein the Na alloy (2) further comprises a third constituent selected from the group consisting of: K, Li, Cu, Al, Se, Si, Sb, Sn and Bi wherein the third constituent is different from the second constituent.

3. The composite material (1) according to claim 2, wherein the Na alloy (2) further comprises a fourth constituent selected from the group consisting of: K, Li, Cu, Al, Se, Si, Sb, Sn and Bi wherein the fourth constituent is different from the second constituent and the third constituent.

4. The composite material (1) according to any one of the preceding claims, wherein a weight ratio between the Na alloy (2) and the fluoropolymer (3) ranges from 6:1 to 1:4, preferably 1:1.

5. The composite material (1) according to any one of the preceding claims, wherein the Na alloy (2) is selected from the group consisting of: NaK, NaLi, NaSe, NaSb, NaSn and NaBi when dependent on claim 1, wherein the Na alloy (2) is selected from the group consisting of: NaKLi, NaLiCu, NaLiAl, NaKSe, NaLiSi, NaKSb, NaKSn, NaLiSn and NaKBi when dependent on claim 2, and wherein the Na alloy (2) is selected from the group consisting of: NaKLiSn, NaKLiSi, NaKLiCu and NaKBiSn when dependent on claim 3.

6. The composite material (1) according to any one of claims 1-4, wherein the Na alloy (2) is NaK.

7. The composite material (1) according to claim 6, wherein a mole ratio between Na and K ranges from 30:1 to 200:1, preferably 32:1, 35:1, 57:1, 100:1, 135:1 or 171:1.

8. The composite material (1) according to any one of the preceding claims, wherein the fluoropolymer (3) is selected from the group consisting of: polytetrafluoroethylene (PTFE), ethylene tetrafluoroethylene (ETFE), perfluoroalkoxy alkanes (PFA), chlorotrifluoroethylene (CTFE), ethylene chlorotrifluoroethylene (ECTFE), polychlorotrifluoroethylene (PCTFE or PTFCE), tetrafluoroethylene (TFE), perfluorooctanoate (PFOA), hexafluoropropylene (HFP), copolymers of hexafluoropropylene (HFP), fluorinated ethylene propylene (FEP), ethylene-tetrafluoroethylene-hexafluoropropylene-fluoroterpolymer (EFEP), hexafluoropropylene-tetrafluoroethylene-ethylene copolymer (THE), and fluorinated vinyl ether (FVE)and poly(3,3,3-trifluoropropyl methylsiloxane (PTFPMS).

9. The composite material (1) according to any one of claims 1-7, wherein the fluoropolymer (3) is polytetrafluoroethylene.

10. An anode (6) comprising:
an electrically conductive substrate (7), and
a composite material (1) according to any one of the preceding claims,
wherein the composite material (1) is arranged at a surface (8) of the substrate (7), such that a solid electrolyte interphase (17) is formed within the composite material (1).

11. A battery (9) comprising an anode (6) according to claim 10.

12. A method (20) for producing a composite material (1) comprising the steps of:
- forming (22) a Na alloy (2) by mixing Na as a first constituent and at least one of K, Li, Se, Sb, Sn and Bi as a further constituent;
- mixing (24) the Na alloy (2) with a fluoropolymer (3), thereby forming the composite material (1) comprising Na originating from the Na alloy (2) which is cross-linked with F originating from the fluoropolymer (3) such that a solid electrolyte interphase (17) forms within the composite material (1), and wherein the first constituent is present in at least 60 mol % and the further constituent is present in at most 40 mol % in the Na alloy (2).

13. The method (20) for producing a composite material (1) according to claim 12, wherein the fluoropolymer (3) is provided in the form of particles having a size less than 10 micrometers, preferably less than 2 micrometers.

14. The method (20) for producing a composite material (1) according claim 12 or 13, wherein the step of mixing (24) the Na alloy (2) and the fluoropolymer (3) is performed at a temperature in the range of 20-100 °C, preferably 20-25 °C.

15. A method (30) for producing an anode (6) comprising:
coating (32) an electrically conductive substrate (7) with a composite material (1) according to any one of claims 1-9 at a surface (8) of the substrate (7), thereby forming the anode (6) with a solid electrolyte interphase (17) at its surface (8).
